# EUROPEAN PATENT SPECIFICATION

(11) **EP 3 726 247 B1**
(45) Date of publication and mention of the grant of the patent: **14.06.2023**
(21) Application number: 19170221.6
(22) Date of filing: 18.04.2019
(51) Int. Cl.: G01S 7/481, G01S 17/89, G01S 17/18, G01S 17/931

(54) **LIDAR IMAGING APPARATUS FOR A MOTOR VEHICLE**
LIDAR-BILDGEBUNGSVORRICHTUNG FÜR EIN KRAFTFAHRZEUG
APPAREIL D'IMAGERIE LIDAR POUR VÉHICULE À MOTEUR

(43) Date of publication of application: 21.10.2020
(73) Proprietor: Veoneer Sweden AB, 447 83 Vårgårda (SE); Beamagine S.L., 08755 Castellbisbal (ES)
(72) Inventor: KÄLLHAMMER, Jan-Erik, 58330 Linköping (SE); RIU, Jordi, 08755 Castellbisbal (ES); RODRIGO, Noel, 08755 Castellbisbal (ES); ROYO, Santiago, 08755 Castellbisbal (ES); GARCÍA-GÓMEZ, Pablo, 08755 Castellbisbal (ES)
(74) Representative: Müller Verweyen

(56) References cited:
- EP-A1- 3 428 677
- US-A1- 2016 363 669

## Description

The invention relates to a lidar imaging apparatus for a motor vehicle, comprising an emitting section adapted to emit a pulsed light beam and to change the direction of the light beam in two dimensions perpendicularly to the light beam, a receiving section having a lens objective and a lidar detector, and an electronic processing unit, wherein light entering the lidar imaging apparatus through said lens objective is directed on said lidar detector, wherein said electronic processing unit is adapted to determine the time-of-flight of a laser pulse from said emitting section to said lidar detector.

Such a lidar imaging apparatus is known from EP 3 428 677 A1, which discloses a vision system comprising a light source arranged on an emitting side and adapted to emit a light beam to a scanned surface in the environment of the vehicle, at least one DMD arranged on a receiving side comprising an array of mirrors, wherein each mirror is adapted to change the direction of redirected light between a first deflection direction and a second deflection direction, a light sensing device arranged to sense light redirected from the DMD in the first deflection direction, and a detecting device arranged to sense light redirected from the DMD in the second deflection direction, wherein a data processing unit is adapted to process the data provided by the light sensing device and by the detecting device in a combined manner.

Another LIDAR imaging system is known from US 2016/0363669 A1, which system includes at least one illumination source for emitting at least one polarized illumination beam of first polarization with wavelengths in a first wave length range, an optical engine core having a polarized beam splitter panel, a quarter wave retarder panel configured between the external image object and the optical engine core and an imaging block having a plurality of illumination detectors. The polarized illumination beams and the retarded reflections do not interfere with each other though transiting along the same axis.

The object of the invention is to provide a further improved lidar imaging apparatus offering alternative ways of making efficient use of the information comprised in the light entering the lidar imaging apparatus through the lens objective.

The invention solves this problem with the features of the independent claims. According to the invention, the receiving section comprises a beam splitter arranged in the light path from said lens objective to said lidar detector, and a further photo detector, wherein said beam splitter is adapted to split off a part of the light beam from said lens objective and to direct the split-off part of said light beam to said further photo detector. The beam splitter splits off a part of the light beam coming from said lens objective and directs it onto the further photo detector, instead onto the lidar detector. This makes it possible to use additional image information, i.e. optical information in addition to that detected by the lidar detector. In other words, the further photo detector adds an additional sensing mode to the imaging system, in particular at wavelengths different from the laser wavelength. This is possible without affecting the performance of the lidar branch with the lidar detector.

Summarizing the above, the invention provides adding a scanning imaging strategy onto current systems without degrading the performance of the lidar imaging by using light currently absorbed by the system in the lidar path. A new imaging mode is provided in the same optical unit without energy losses for the lidar imaging, as energy is used in wavelength ranges unusable in the lidar detector. An enhanced number of modes in same optical unit can lead to simplified data fusion, which will be explained below. In short, the invention adds a new imaging mode, suitable for optimized data fusion, not degrading lidar performance, and enabling a multiplicity of imaging modes. Also preferably, imaging modes may be configurable according to specifications from the car manufacturer.

It is possible to arrange more than one beam splitter in the optical path from the lens objective to the lidar detector, such that multiple sensing options are possible.

Preferably, the beam splitter is wavelength-selecting. In this manner, it is advantageously possible to direct radiation having the laser wavelength primarily to the lidar detector, and to direct radiation having other wavelengths primarily to the further photo detector. This enables a higher signal-to-noise ratio both for the lidar signal, as well as for the signal from the further photo detector. Advantageously, the beam splitter enables color imaging, multi-spectral imaging and/or polarimetric imaging. When preferably coupled with a polarized emitted pulsed, such arrangement would allow the system to analyze light in the further photo detector and/or in the lidar detector in different polarizing directions.

Alternatively or in addition to a wavelength selecting beam splitter, at least one wavelength-selecting filter may be arranged behind the beam splitter. In one embodiment for example, a filter letting pass only light having wavelengths different from the laser wavelength may be arranged between the beam splitter and the further photo detector. In this case, it is not necessary to have a wavelength selecting beam splitter.

Generally, beam splitting may preferably be performed using a dichroic beam splitter. Other beam splitting options, such as a polarizing beam splitter, or other means separating the lidar wavelength from other wavelengths could be considered, such as a semitransparent mirror, a dichroic mirror or some other.

The further photo detector is according to the invention adapted to perform color imaging, multi-spectral imaging and/or polarimetric imaging. In preferred embodiments, the further photo detector and/or the lidar detector comprises a photodiode or photodiode array. Generally, the further detector can be of many kinds, such as a photodiodes, or low resolution CMOS/CCD arrays. The further detector can have the same spatial resolution as the lidar detector.

In preferred embodiments, the electronic processing unit is adapted to fuse image data provided by the lidar detector and the further photo detector into a fused image. In this manner, the invention provides a congruent combination of lidar imaging and non-lidar imaging, and thus a combined imaging method fully congruent with lidar. This is particularly useful under normal weather or light conditions in the vehicle environment. I.e., when no light scattering is present in the lidar images, further non-lidar imaging can advantageously serve as a cheaper approach to get an intensity image which complements the lidar image and is fully congruent with it.

The further image capture is used together with a lidar image, utilizing a single spatial light modulator. This means that two imaging detectors are used, one for obtaining the time-of-flight distance information (lidar) and the other for obtaining a further image comprising complementary information. The invention adds sensing in the non-lidar imaging path generated by the beam splitter, combined with the lidar image path in congruent fashion in one device. The lidar path is where the laser illumination returned signal is acquired. The lidar image may be incoherent or coherent time-of-flight 3D sensing. A common spatial light modulator is a Digital Micromirror Device DMD.

The invention is preferably applicable in a lidar imaging apparatus having a spatial light modulator, in particular a DMD. However, the invention can be applied to lidar imaging apparatuses without spatial light modulator or DMD as well, since it more generally relates to a lidar detection strategy.

Generally, adverse weather conditions such as rain, fog, smog, sand and snow can obscure the scene and hence reduce the detection range of the lidar imaging. To take account of this, the electronic processing unit is according to the invention adapted to determine a condition where said lidar imaging is not fully operative (for example due to fog, sand etc.), and if such condition is determined, to use images from said further photo detector at different depths to estimate a depth map. Shortly speaking, the further images can be used to recover the depth map in case the lidar path has difficulties determining a reliable depth map. Thus, under adverse weather conditions, further imaging can be used as a backup or support system for the lidar imaging path, advantageously being integrated in a single imaging unit.

Also preferably, the imaging apparatus can comprise one or more additional illumination sources, preferably operating at a different wavelength than that of the laser, and preferably adapted to illuminate the scene viewed by the imaging apparatus. The additional illumination source may be polarized, coherent, incoherent, continuous wave, frequency modulated, amplitude modulated and/or pulsed. With the additional illumination source, a reduced impact of light scattered in the environment can be achieved, providing improved resolution or better image quality as compared to regular imaging without additional illumination source.

According to a further aspect of the invention, the imaging approach in the further imaging detector might be active, that is, pulsed light may be emitted, and advantageously range gating is performed with respect to the further photo detector. This enables a new useful feature of the invention as repeated pulses can be sampled at different conditions; for instance, different focus of the emitting beam, or different time gates, or different pulse lengths may be used repeatedly to gather more information depending on the environmental conditions. An interesting option is to modify features of the imaging apparatus to achieve information from different depth slices of the scene, thus enabling the creation of alternative depth maps when the conditions are unfavorable for the lidar imaging. The variability of such parameters (or of some others in the emission/detection scheme) would enable a better mapping of the environment and further optimally complement the lidar imaging in light scattering conditions, e.g. fog, smoke, smog, etc. After all, the electronic processing unit is preferably adapted to perform range gating with respect to the further photo detector, further preferably using a variable focus/time gate/pulse length of the illumination for improved detection in scattering conditions, thus calculating depth maps when the lidar imaging is unable.

Another advantageous feature is the ability to dynamically adapt the balance between the different (congruent) images. This can for example be done by interspersing a lidar image from the lidar imaging path without any gating to suppress obscurants at distances outside of the target location as a measure of overall scattering. This measure can then be used to control the various sensing modes in the unit, such as emphasis between lidar imaging and further imaging, slice length and position in gated imaging, etc. That will allow a dynamic (real-time) adaptivity to current ambient conditions such as amount of obscurants in the imaging path.

In preferred embodiments, the receiving section comprises a digital micromirror device having a matrix of mirrors, wherein each mirror of the digital micromirror device is controllable by said electronic processing unit to change at least between a first position where light entering the lidar imaging apparatus through said lens objective is directed on said lidar detector and/or said further photo detector (61), and a second position. In such embodiments having a DMD as spatial light modulator, in said second position of a mirror, light entering the lidar imaging apparatus through said lens objective is preferably directed on a photo sensor. The photo sensor is preferably adapted to perform color imaging, multi-spectral imaging and/or polarimetric imaging.

A practically preferred embodiment provides: 1) a lidar path providing lidar imaging at a laser wavelength of choice, which is first directed trough the DMD towards the lidar detector, e.g. an APD; 2) reflected by a beam splitter arranged after the DMD in the same optical path, with a further detector, (single photo diode, or array of photo diodes) which recovers intensity information on the light reflected by the beam splitter, enabling for example polarimetric imaging and/or multispectral imaging; 3) a second light path towards a photo sensor, for example a CMOS detector, enabling for example color imaging, polarimetric imaging and/or multispectral imaging. All kinds of combinations of modes based on light intensity are valid, e.g. polarized imaging in vertical by the photo sensor, and intensity imaging in circular polarization by the further photo detector.

The lidar detector preferably comprises one or more diode or diode array from the group of photodiode(s) PD, Avalanche Photo Diode(s) APD; Single Photon Avalanche Diode(s) SPAD; Positive-Intrinsic-Negative PIN diode(s); Multi Pixel Photon Counter MPPC diode(s), solid-state photomultiplier, photomultiplier tube, or balanced detectors in pairs and position sensitive detectors (PSD). The lidar detector can be a 1D or 2D photodiode array.

In the following the invention shall be illustrated on the basis of preferred embodiments with reference to the accompanying drawings, wherein:
- Fig. 1: shows a schematic setup of a lidar imaging apparatus;
- Fig. 2: shows a fused image obtained from fusing images from the lidar detector and the further detector; and
- Fig. 3: shows a plan view onto the DMD for illustrating a possible scan pattern of the laser beam.

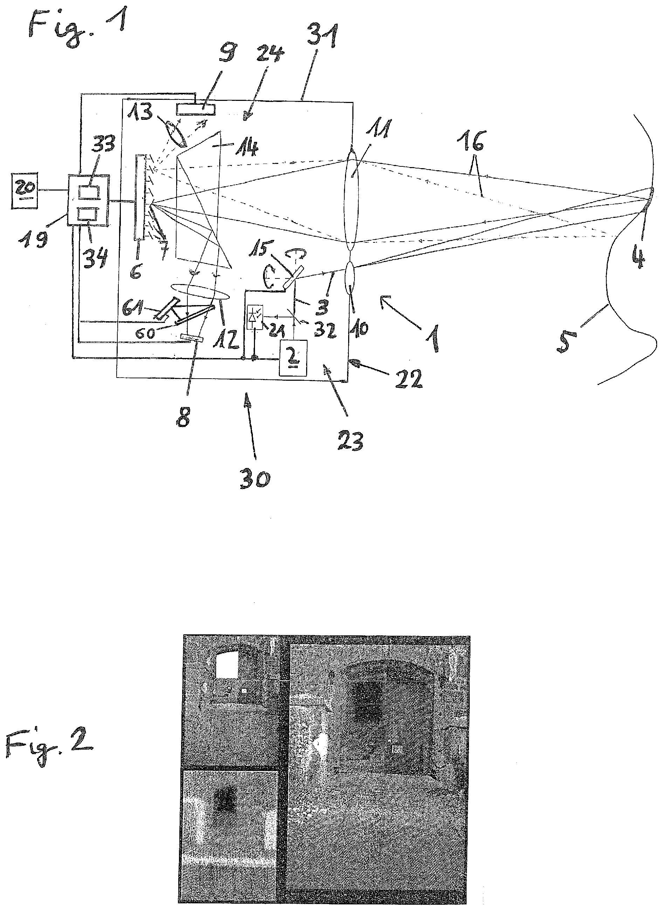

The lidar imaging apparatus 30 is mounted in or to a motor vehicle to capture images of a region in the environment of the motor vehicle, for example a region in front of the motor vehicle. The lidar imaging apparatus 30 comprises an optical unit 22 and a data processing unit 19. The optical unit 22 comprises a housing 31, an emitting section 23 with a light source 2 and a scanning device 15, and a receiving section 24 with a Digital Micromirror Device (DMD) 6, a lidar detector 8, a beam splitter 60 and a further photo detector 61. In a preferred embodiment shown in Figure 1, the emitting section 23 and the receiving section 24 are arranged in a single optical unit 22 in a common housing 31. In other embodiments, the emitting section 23 and the receiving section 24 are separate units each having its own housing.

The light source 2, in particular a laser device, generates a pulsed beam 3 of light, in particular pulsed laser radiation. The scanning device 15 is adapted to direct the laser beam 3 through a transparent optical element 10 into the environment of the motor vehicle. The scanning device 15 is adapted to change the direction of the laser beam 3 in two directions perpendicular to the laser beam 3, for example in the horizontal and vertical direction, in order to scan a surface 5 in the vehicle environment in two directions, as controlled by the electronic control unit 19. For example, the scanning device 15 can comprise a mirror rotatable around two perpendicular rotation axes, as shown in Figure 1. Alternatively, two mirrors each rotatable around one axis could be used. Furthermore, a line scan arrangement is not excluded, comprising a mirror rotatable around a, preferably vertical, axis, and a line detector array 8.

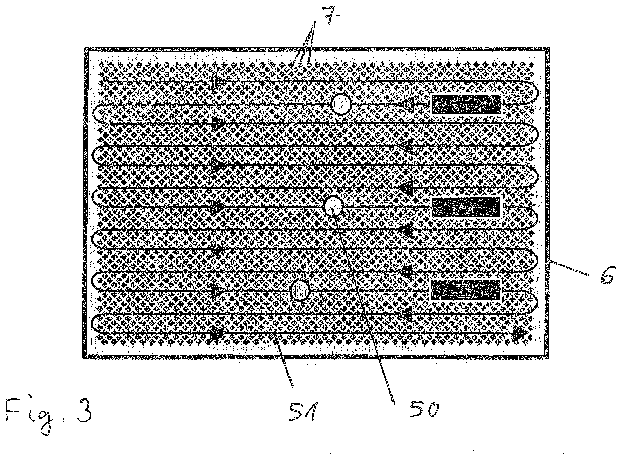

A possible scanning pattern generated by the scanning device 15 is shown in Figure 3, which will be described later. The optical element 10 may be a transparent window, or a lens or lens group, in particular for modifying, for example widening, the laser beam 3. The scanning device 15 may preferably be a MEMS device.

When the light beam 3 emitted by the emitting section 23 hits a surface 5 in the vehicle environment, a laser spot 4 is generated on the surface 5. Light reflected from the surface 5 in the region of and around the laser spot 4 enters through the lens objective 11 into the receiving section 24 of the imaging apparatus 30. The lens objective 11 comprises one or more lenses arranged for focusing an image of the scanned surface 5 in the region around the laser spot 4 onto a spatial light modulator, in particular a digital micromirror device DMD 6.

The DMD 6 comprises a matrix of mirrors 7 which are controllable by the electronic processing unit 19 to change between at least two different positions. In a first position of each mirror 7 (illustrated by the fifth mirror 7 from the top in the example of Figure 1), the light incident from the lens objective 11 onto the DMD 6 is directed towards and onto a lidar detector 8. A double prism 14, or another suited light deflection element, may be provided for changing the direction of the light outgoing from the DMD 6 in the first direction onto the lidar detector 8 to be explained below. Preferably, a further lens objective 12 having one or more optical lenses is provided in the first or lidar path from the DMD 6, to focus the light outgoing from the DMD 6 in the first direction onto the lidar detector 8.

The emitting section 23 of the optical unit 31 comprises a beam splitter 32 for splitting a small amount of the laser beam 3 to a photosensitive element 21, like a photodiode. The photosensitive element 21 is provided for defining the start time of a laser pulse. The end time of the same laser pulse can be determined by the data processing unit 19 on the basis of a corresponding signal from the lidar detector 8. The time period from the start time until the end time of a laser pulse defines time-of-flight of the laser pulse. The time-of-flight can be converted into a distance by the data processing unit 19 using the speed of light. After all, the distance information of all mirrors 7 of the DMD 6 provides a depth map of the scanned field of view of the optical unit 22.

The lidar detector 8 may be any one of a photodiode or a photodiode array, an avalanche photo diode APD, an APD array, a single photon avalanche diode SPAD or an SPAD array, a positive-intrinsic-negative PIN diode or a PIN array, a multi pixel photon counter MPPC diode array, or any other suited photosensitive lidar detector. The lidar detector 8 is preferably a single pixel detector, but a multi-pixel detector is also possible.

The receiving section 24 of the optical unit 31 comprises a beam splitter 60 arranged in the optical path from the lens objective 11 to the further photo detector 61. Preferably, the beam splitter 60 arranged in the optical path from the DMD 6 to the further photo detector 61, more preferably in the optical path from the further lens objective 12 to the further photo detector 61. The further photo detector 61 is advantageously arranged in the focus of the further lens objective 12, like the lidar detector 8.

The beam splitter 60 splits off a part of the light beam coming from said lens objective 11 and directs it onto the further photo detector 61, instead onto the lidar detector 8. This makes it possible to use additional image information, i.e. optical information in addition to that detected by the lidar detector 8. In other words, the further photo detector 61 adds an additional sensing mode to the imaging system, in particular at wavelengths different from the laser wavelength. This is possible without affecting the performance of the lidar branch with the lidar detector 8.

The beam splitter 60 may be a semi-transparent mirror oriented under a suited reflection angle relative to the light beam incident on it, like in Figure 1, a prism, or any other suited optical beam splitting device. In the embodiment of Figure 1, the part of the optical radiation transmitted through the beam splitter 60 proceeds to the lidar detector 8 and the part of the optical radiation reflected by the beam splitter 60 proceeds to the further photo detector 61. However, an arrangement where the part of the optical radiation transmitted through the beam splitter 60 proceeds to the further photo detector 61 and the part of the optical radiation reflected by the beam splitter 60 proceeds to the lidar detector 8 is also possible.

Advantageously, the beam splitter 60 is wavelength-selecting or dichroic. In this manner, it is advantageously possible to direct radiation having the laser wavelength primarily to the lidar detector 8, and to direct radiation having other wavelengths primarily to the further photo detector 61. This enables a higher signal-to-noise ratio both for the lidar signal, as well as for the signal from the further photo detector 61.

The further photo detector 61 may be any one of a photodiode or a photodiode array, an avalanche photo diode APD, an APD array, a single photon avalanche diode SPAD or an SPAD array, a positive-intrinsic-negative PIN diode or a PIN array, a multi pixel photon counter MPPC diode array, or any other suited photosensitive lidar detector. The further photo detector 61 is preferably a single pixel detector, but a multi-pixel detector is also possible.

In a second position of each mirror of the DMD 6 (in the example of Figure 1, all other mirrors 7 than 5^{th} mirror 7 from top), the light incident from the lens objective 11 onto the DMD 6 is preferably directed towards and onto a photo sensor 9 (shown for the 2^{nd} mirror 7 from the top in Figure 1). A suited light deflection element, not shown in Figure 1, may be provided for changing the direction of the light outgoing from the DMD 6 in the second direction onto the photo sensor 9. Preferably, another lens objective 13 having one or more optical lenses is provided in the second or further path from the DMD 6, for focusing the light outgoing from the DMD 6 in the second direction onto the photo sensor 9. Preferably, the lens objective 13 and the photo sensor 9 are part of a camera. The mirrors 7 of the DMD 6 are controlled to be in the first or second position by the electronic control unit 19.

The photo sensor 9 preferably is or comprises an imaging sensor, like a CCD sensor, a CMOS based sensor, a focal plane array, a polarimetric sensor and/or a combination thereof and/or any suited photosensitive area sensor or line sensor. The photo sensor 9 may be suited for taking color images, in particular RGB images, polarimetric images, multispectral images or grayscale images. The photo sensor 9 is preferably a multi pixel and/or array detector, but a low resolution or single pixel detector is also possible. The peak sensitivity of the photo sensor 9 may be different from the wavelength of the laser beam 3.

Although it is preferable to provide a photo sensor 9 to capture light outgoing from the DMD 6 in the second direction, this is not mandatory. Embodiments where for example an absorber is arranged instead of the photo sensor 9 are covered by the present invention.

The electronic control unit 19 is preferably a digital device which is programmed or programmable and preferably comprises a microprocessor, a microcontroller, a digital signal processor (DSP), a System-On-Chip (SoC) device, and/or dedicated hardware device, for example Field Programmable Gate Array (FPGA), an Application Specific Integrated Circuit (ASIC), a Graphics Processing Unit (GPU) or an FPGA and/or ASIC and/or GPU part in a System-On-Chip (SoC) device. The data processing unit 19 is preferably realized in an on-board electronic control unit (ECU). The data processing unit 19 is preferably adapted to receive image data from the lidar detector 8, the further photo detector 61 and/or the photo sensor 9.

As shown in Figure 3, the light reflected from the scanned surface 5 in the region of the laser spot 4 and focused onto the DMD 6 by the lens objective 11 causes a corresponding laser spot 50 on the DMD 6. Also shown in Figure 3 is the scanning pattern 51 of the laser beam 3. Here, a line scanning pattern 51 is shown for example, where after scanning a line, the laser beam is changed vertically downwards to start the scan of the next line in the opposite direction than in the previous line. Other scan patterns are possible, for example line scans from bottom to top, column scans, etc. It should be noted that the three laser spots 50 visible in Figure 3 correspond to three different times; at each time, only one laser spot 50 is present on the DMD 6. The three dark rectangles on the right in Figure 3 have no meaning and should be ignored. The photo sensor 9 may be adapted to image essentially the whole field of view of the receiving section 24 at each time, because the number of mirrors 7 set to the first position for directing the laser spot 50 to the lidar detector 8 is small, and all other mirrors 7 can be set to the second position to direct the incoming light to the photo sensor 9.

In a preferred application, lidar images from the lidar detector 8 and further images from the further photo detector 61, comprising complementary image information, are fused to result in a fused image providing more image information than the lidar images alone. This is illustrated by Figure 2, showing an image obtained by the further photo detector 61 (top left in Fig. 2), a depth image obtained by the lidar detector 8 (bottom left in Fig. 2), and a fused image (right in Fig. 2). The data fusion is preferably carried out in the data processing unit 19. The further image can have a different resolution, in particular a higher resolution, than the lidar depth image. Both grey-scale and depth images can be processed, e.g. by interpolation and/or superposition, and a field of view matching can be performed to match the images and achieve the fused image.

The image fusion described above is preferably carried out under normal environmental conditions, like weather and/or light conditions. In this regard, the data processing unit 19 is preferably adapted to determine whether the environmental conditions are normal, or if one or more extraordinary environmental conditions are fulfilled, like fog, rain, snow and so on, or if the lidar imaging is inoperative or low quality for some reasons. In that case, the further image from the further photo detector 61 may be used in a manner different from the above described data fusion. For example, a depth image could be calculated from the further image, for example by optical flow calculation, and used instead of the lidar depth image. A depth map can be generated using gated imaging when the photo detector 61 is sensitive to the illumination radiation used for gating, including the same wavelength as the emitted laser pulse. Alternatively, the quality of the lidar depth map could be improved using the further image information from the photo sensor 9.

After all, the electronic processing unit can preferably determine a condition where the lidar imaging is not fully operative, and to use images from said further photo detector 61 at different depths to estimate a depth map.

Alternatively or in addition to preferred data fusion on image data from the lidar detector 8 and the further photo detector 61, data fusion may be performed on image data from the lidar detector 8 and the photo sensor 9, on image data from the further photo detector 61 and the photo sensor 9, and/or on the image data from all three sensors 8, 9, 61.

Further image and data processing is carried out by corresponding software in the data processing unit 19 on the basis of the image information provided by the lidar detector 8, the further photo detector 61 and/or the photo sensor 9. The image and data processing in the processing unit 19 may for example comprise identifying and preferably also classifying possible objects (object candidates) in front of the motor vehicle, such as pedestrians, other vehicles, bicyclists and/or large animals, tracking over time the position of objects or object candidates identified in the captured images, and activating or controlling at least one safety device 20 depending on an estimation performed with respect to a tracked object, for example on an estimated collision probability. The safety device 20 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals. All steps from image data acquisition, depth estimation, data processing to possible activation and/or control of the driver assistance device 20 are performed automatically and continuously during driving in real time.

The invention is applicable to autonomous driving, where the ego vehicle is an autonomous vehicle adapted to drive partly or fully autonomously or automatically, and driving actions of the driver are partially and/or completely replaced or executed by the ego vehicle.

## Claims

1. A lidar imaging apparatus (30) for a motor vehicle, comprising an emitting section (23) adapted to emit a pulsed light beam (3) and to change the direction of the light beam (3) in two dimensions perpendicularly to the light beam (3), a receiving section (24) having a lens objective (11) and a lidar detector (8), and an electronic processing unit (19), wherein light entering the lidar imaging apparatus (30) through said lens objective (11) is directed on said lidar detector (8), wherein said electronic processing unit (19) is adapted to determine the time-of-flight of a laser pulse from said emitting section (23) to said lidar detector (8), wherein the receiving section (24) comprises a beam splitter (60) arranged in the light path from said lens objective (11) to said lidar detector (8), and a further photo detector (61), wherein said beam splitter (60) is adapted to split off a part of the light beam from said lens objective (11) and to direct the split-off part of said light beam to said further photo detector (61), **characterized in that**
said electronic processing unit (19) is adapted to determine a condition, where, due to a reduced detection range caused by adverse weather conditions, said lidar imaging is not fully operative, and if such condition is determined, to use images from said further photo detector (61) at different depths to estimate a depth map.

2. The lidar imaging apparatus as claimed in claim 1, **characterized in that** said beam splitter (60) is wavelength-selecting.

3. The lidar imaging apparatus as claimed in claim 1 or 2, **characterized in that** at least one wavelength-selecting filter is arranged behind said beam splitter (60).

4. The lidar imaging apparatus as claimed in claim 2, **characterized in that** said wavelength-selecting beam splitter (60) is adapted to direct radiation having the laser wavelength primarily to said lidar detector (8) and to direct radiation having other wavelengths primarily to said further photo detector (61).

5. The lidar imaging apparatus as claimed in claim 3, **characterized in that** said wavelength-selecting filter is adapted to direct radiation having the laser wavelength primarily to said lidar detector (8) and to direct radiation having other wavelengths primarily to said further photo detector (61).

6. The lidar imaging apparatus as claimed in claim 2 and 3, **characterized in that** said wavelength-selecting beam splitter (60) and said wavelength-selecting filter are adapted to direct radiation having the laser wavelength primarily to said lidar detector (8) and to direct radiation having other wavelengths primarily to said further photo detector (61).

7. The lidar imaging apparatus as claimed in any one of the preceding claims, **characterized in that** said further photo detector (61) and/or said lidar detector (8) is adapted to perform color imaging, multi-spectral imaging and/or polarimetric imaging.

8. The lidar imaging apparatus as claimed in any one of the preceding claims, **characterized in that** said electronic processing unit (19) is adapted to fuse image data provided by said lidar detector (8) and said further photo detector (61) into a fused image.

9. The lidar imaging apparatus as claimed in any one of the preceding claims, **characterized in that** said further photo detector (61) and/or said lidar detector (8) comprises a photodiode or a photodiode array.

10. The lidar imaging apparatus as claimed in any one of the preceding claims, **characterized in that** said receiving section (24) comprises a digital micromirror device (6) having a matrix of mirrors (7), wherein each mirror (7) of the digital micromirror device (6) is controllable by said electronic processing unit (19) to change at least between a first position where light entering the lidar imaging apparatus (30) through said lens objective (11) is directed on said lidar detector (8) and/or said further photo detector (61), and a second position.

11. The lidar imaging apparatus as claimed in claim 10, **characterized in that** in said second position of a mirror (7), light entering the lidar imaging apparatus (30) through said lens objective (11) is directed on a photo sensor (9).

12. The lidar imaging apparatus as claimed in claim 11, **characterized in that** photo sensor (9) is adapted to perform color imaging, multi-spectral imaging and/or polarimetric imaging.

13. The lidar imaging apparatus as claimed in any one of the preceding claims, **characterized in that** the imaging apparatus can comprises at least one additional illumination source, preferably operating at a different wavelength than the laser (2), for illuminating the scene viewed by the imaging apparatus.

14. The lidar imaging apparatus as claimed in any one of the preceding claims, **characterized in that** said electronic control unit (19) is adapted to perform range gating with respect to the further photo detector (61) and/or the photo sensor (9).

15. The lidar imaging apparatus as claimed in any one of the preceding claims, **characterized in that** said electronic control unit (19) is designed to dynamically adapt the balance between different images from said lidar detector (8), said further photo detector (61) and/or said photo sensor (9).

## Patentansprüche

1. Lidar-Bildaufnahmevorrichtung (30) für ein Kraftfahrzeug, mit einem Sendeteil (23), der dazu eingerichtet ist, einen gepulsten Lichtstrahl (3) zu emittieren und die Richtung des Lichtstrahls (3) in zwei Dimensionen senkrecht zu dem Lichtstrahl (3) zu ändern, einem Empfangsteil (24) mit einem Linsenobjektiv (11) und einem Lidar-Detektor (8), und einer elektronischen Verarbeitungseinheit (19), wobei Licht, das durch das Linsenobjektiv (11) in die Lidar-Bildaufnahmevorrichtung (30) eintritt, auf den Lidar-Detektor (8) gerichtet wird, wobei die elektronische Verarbeitungseinheit (19) dazu eingerichtet ist, die Laufzeit eines Laserpulses von dem Sendeteil (23) zu dem Lidar-Detektor (8) zu bestimmen, wobei der Empfangsteil (24) einen Strahlteiler (60) aufweist, der in dem Lichtweg von dem Linsenobjektiv (11) zu dem Lidar-Detektor (8) angeordnet ist, und einen weiteren Fotodetektor (61), wobei der Strahlteiler (60) dazu eingerichtet ist, einen Teil des Lichtstrahls von dem Linsenobjektiv (11) abzuspalten und den abgespaltenen Teil des Lichtstrahls auf den weiteren Fotodetektor (61) zu richten, **dadurch gekennzeichnet, dass**
die elektronische Verarbeitungseinheit (19) dazu eingerichtet ist, einen Zustand zu bestimmen, in dem aufgrund eines reduzierten Erfassungsreichweite, die durch schlechte Wetterbedingungen verursacht wird, die Lidar-Bildaufnahme nicht voll funktionsfähig ist, und wenn ein solcher Zustand bestimmt wird, Bilder von dem weiteren Fotodetektor (61) in verschiedenen Tiefen zu verwenden, um eine Tiefenkarte zu schätzen.

2. Lidar-Bildaufnahmevorrichtung nach Anspruch 1, **dadurch gekennzeichnet, dass** der Strahlteiler (60) wellenlängenselektiv ist.

3. Lidar-Bildaufnahmevorrichtung nach Anspruch 1 oder 2, **dadurch gekennzeichnet, dass** hinter dem Strahlteiler (60) mindestens ein wellenlängenselektierender Filter angeordnet ist.

4. Lidar-Bildaufnahmevorrichtung nach Anspruch 2, **dadurch gekennzeichnet, dass** der wellenlängenselektierende Strahlteiler (60) dazu eingerichtet ist, Strahlung mit der Laserwellenlänge primär auf den Lidar-Detektor (8) zu richten und Strahlung mit anderen Wellenlängen primär auf den weiteren Fotodetektor (61) zu richten.

5. Lidar-Bildaufnahmevorrichtung nach Anspruch 3, **dadurch gekennzeichnet, dass** der wellenlängenselektierende Filter dazu eingerichtet ist, Strahlung mit der Laserwellenlänge primär auf den Lidar-Detektor (8) zu richten und Strahlung mit anderen Wellenlängen primär auf den weiteren Fotodetektor (61) zu lenken.

6. Lidar-Bildaufnahmevorrichtung nach Anspruch 2 und 3, **dadurch gekennzeichnet, dass** der wellenlängenselektierende Strahlteiler (60) und der wellenlängenselektierende Filter dazu eingerichtet sind, Strahlung mit der Laserwellenlänge primär auf den Lidar-Detektor (8) zu richten und Strahlung mit anderen Wellenlängen primär auf den weiteren Fotodetektor (61) zu richten.

7. Lidar-Bildaufnahmevorrichtung nach einem der vorangehenden Ansprüche, **dadurch gekennzeichnet, dass** der weitere Fotodetektor (61) und/oder der Lidar-Detektor (8) dazu eingerichtet ist, Farbbildaufnahmen, multispektrale Bildaufnahmen und/oder polarimetrische Bildaufnahmen durchzuführen.

8. Lidar-Bildaufnahmevorrichtung nach einem der vorangehenden Ansprüche, **dadurch gekennzeichnet, dass** die elektronische Verarbeitungseinheit (19) dazu eingerichtet ist, die von dem Lidar-Detektor (8) und dem weiteren Fotodetektor (61) bereitgestellten Bilddaten zu einem fusionierten Bild zu fusionieren.

9. Lidar-Bildaufnahmevorrichtung nach einem der vorhergehenden Ansprüche, **dadurch gekennzeichnet, dass** der weitere Fotodetektor (61) und/oder der Lidar-Detektor (8) eine Fotodiode oder eine Fotodiodenanordnung umfasst.

10. Lidar-Bildaufnahmevorrichtung nach einem der vorangehenden Ansprüche, **dadurch gekennzeichnet, dass** der Empfangsteil (24) eine digitale Mikrospiegelvorrichtung (6) mit einer Matrix von Spiegeln (7) umfasst, wobei jeder Spiegel (7) der digitalen Mikrospiegelvorrichtung (6) durch die elektronische Verarbeitungseinheit (19) steuerbar ist, um zumindest zwischen einer ersten Position, in der Licht, das durch das Linsenobjektiv (11) in die Lidar-Bildaufnahmevorrichtung (30) eintritt, auf den Lidar-Detektor (8) und/oder den weiteren Fotodetektor (61) gerichtet wird, und einer zweiten Position zu wechseln.

11. Lidar-Bildaufnahmevorrichtung nach Anspruch 10, **dadurch gekennzeichnet, dass** in der zweiten Position eines Spiegels (7) Licht, das durch das Linsenobjektiv (11) in die Lidar-Bildaufnahmevorrichtung (30) eintritt, auf einen Fotosensor (9) gerichtet wird.

12. Lidar-Bildaufnahmevorrichtung nach Anspruch 11, **dadurch gekennzeichnet, dass** der Fotosensor (9) dazu eingerichtet ist, eine Farbbildaufnahme, eine multispektrale Bildaufnahme und/oder eine polarimetrische Bildaufnahme durchzuführen.

13. Lidar-Bildaufnahmevorrichtung nach einem der vorangehenden Ansprüche, **dadurch gekennzeichnet, dass** die Bildaufnahmevorrichtung mindestens eine zusätzliche Beleuchtungsquelle umfassen kann, die vorzugsweise mit einer anderen Wellenlänge als der Laser (2) arbeitet, um die von der Bildaufnahmevorrichtung betrachtete Szene zu beleuchten.

14. Lidar-Bildaufnahmevorrichtung nach einem der vorangehenden Ansprüche, **dadurch gekennzeichnet, dass** die elektronische Steuereinheit (19) dazu eingerichtet ist, eine Entfernungssteuerung in Bezug auf den weiteren Fotodetektor (61) und/oder den Fotosensor (9) durchzuführen.

15. Lidar-Bildaufnahmevorrichtung nach einem der vorangehenden Ansprüche, **dadurch gekennzeichnet, dass** die elektronische Steuereinheit (19) dazu eingerichtet ist, das Gleichgewicht zwischen verschiedenen Bildern von dem Lidar-Detektor (8), dem weiteren Fotodetektor (61) und/oder dem Fotosensor (9) dynamisch anzupassen.

## Revendications

1. Un appareil d'imagerie lidar (30) pour un véhicule à moteur, comprenant une partie émettrice (23) conçue pour émettre un faisceau lumineux (3) pulsé et pour modifier la direction du faisceau lumineux (3) dans deux dimensions perpendiculairement au faisceau lumineux (3), une partie réceptrice (24) présentant un objectif à lentille (11) et un détecteur lidar (8), et une unité de traitement électronique (19), de la lumière qui pénètre dans l'appareil d'imagerie lidar (30) par ledit objectif à lentille (11) étant dirigée sur ledit détecteur lidar (8), ladite unité de traitement électronique (19) étant conçue pour déterminer le temps de vol d'une impulsion laser de ladite partie émettrice (23) audit détecteur lidar (8), la partie réceptrice (24) comprenant un séparateur de faisceau (60) agencé dans le trajet de la lumière dudit objectif à lentille (11) audit détecteur lidar (8), et un autre photodétecteur (61), ledit séparateur de faisceau (60) étant conçu pour séparer une partie du faisceau lumineux dudit objectif à lentille (11) et pour diriger la partie séparée dudit faisceau lumineux vers ledit autre photodétecteur (61), **caractérisé en ce que**
ladite unité de traitement électronique (19) est conçue pour déterminer une condition dans laquelle, en raison d'une plage de détection réduite causée par des conditions météorologiques défavorables, ladite imagerie lidar n'est pas entièrement opérationnelle, et si une telle condition est déterminée, pour utiliser des images provenant dudit autre photodétecteur (61) à différentes profondeurs pour estimer une carte de profondeur.

2. L'appareil d'imagerie lidar selon la revendication 1, **caractérisé en ce que** ledit séparateur de faisceau (60) est à sélection de longueurs d'onde.

3. L'appareil d'imagerie lidar selon la revendication 1 ou 2, **caractérisé en ce qu'**au moins un filtre de sélection de longueurs d'onde est agencé derrière ledit séparateur de faisceau (60).

4. L'appareil d'imagerie lidar selon la revendication 2, **caractérisé en ce que** ledit séparateur de faisceau (60) à sélection de longueurs d'onde est conçu pour diriger le rayonnement ayant la longueur d'onde laser principalement vers ledit détecteur lidar (8) et pour diriger le rayonnement ayant d'autres longueurs d'onde principalement vers ledit autre photodétecteur (61).

5. L'appareil d'imagerie lidar selon la revendication 3, **caractérisé en ce que** ledit filtre de sélection de longueurs d'onde est conçu pour diriger le rayonnement ayant la longueur d'onde laser principalement vers ledit détecteur lidar (8) et pour diriger le rayonnement ayant d'autres longueurs d'onde principalement vers ledit autre photodétecteur (61).

6. L'appareil d'imagerie lidar selon les revendications 2 et 3, **caractérisé en ce que** ledit séparateur de faisceau (60) à sélection de longueurs d'onde et ledit filtre de sélection de longueurs d'onde sont conçus pour diriger le rayonnement ayant la longueur d'onde laser principalement vers ledit détecteur lidar (8) et pour diriger le rayonnement ayant d'autres longueurs d'onde principalement vers ledit autre photodétecteur (61).

7. L'appareil d'imagerie lidar selon l'une quelconque des revendications précédentes, **caractérisé en ce que** ledit autre photodétecteur (61) et/ou ledit détecteur lidar (8) sont conçus pour réaliser de l'imagerie couleur, de l'imagerie à spectres multiples et/ou de l'imagerie polarimétrique.

8. L'appareil d'imagerie lidar selon l'une quelconque des revendications précédentes, **caractérisé en ce que** ladite unité de traitement électronique (19) est conçue pour fusionner des données d'image fournies par ledit détecteur lidar (8) et ledit autre photodétecteur (61) en une image fusionnée.

9. L'appareil d'imagerie lidar selon l'une quelconque des revendications précédentes, **caractérisé en ce que** ledit autre photodétecteur (61) et/ou ledit détecteur lidar (8) comprennent une photodiode ou un réseau de photodiodes.

10. L'appareil d'imagerie lidar selon l'une quelconque des revendications précédentes, **caractérisé en ce que** ladite partie réceptrice (24) comprend un dispositif numérique à micromiroirs (6) présentant une matrice de miroirs (7), chaque miroir (7) du dispositif numérique à micromiroirs (6) pouvant être commandé par ladite unité de traitement électronique (19) pour commuter au moins entre une première position dans laquelle de la lumière pénétrant dans l'appareil d'imagerie lidar (30) par ledit objectif à lentille (11) est dirigée sur ledit détecteur lidar (8) et/ou ledit autre photodétecteur (61), et une seconde position.

11. L'appareil d'imagerie lidar selon la revendication 10, **caractérisé en ce que** dans ladite seconde position d'un miroir (7), de la lumière pénétrant dans l'appareil d'imagerie lidar (30) par ledit objectif à lentille (11) est dirigée sur un capteur optique (9).

12. L'appareil d'imagerie lidar selon la revendication 11, **caractérisé en ce que** le capteur optique (9) est conçu pour réaliser de l'imagerie couleur, de l'imagerie à spectres multiples et/ou de l'imagerie polarimétrique.

13. L'appareil d'imagerie lidar selon l'une quelconque des revendications précédentes, **caractérisé en ce que** l'appareil d'imagerie peut comprendre au moins une source d'éclairage supplémentaire, fonctionnant de préférence à une longueur d'onde différente du laser (2), pour éclairer la scène vue par l'appareil d'imagerie.

14. L'appareil d'imagerie lidar selon l'une quelconque des revendications précédentes, **caractérisé en ce que** ladite unité de commande électronique (19) est conçue pour réaliser un contrôle de la distance par rapport à l'autre photodétecteur (61) et/ou au capteur optique (9).

15. L'appareil d'imagerie lidar selon l'une quelconque des revendications précédentes, **caractérisé en ce que** ladite unité de commande électronique (19) est conçue pour adapter de manière dynamique la balance entre différentes images provenant dudit détecteur lidar (8), dudit autre photodétecteur (61) et/ou dudit capteur optique (9).
